(19) Europäisches Patentamt
European Patent Office
Office européen des brevets

(11) Veröffentlichungsnummer: **0 269 780 B1**

(12) **EUROPÄISCHE PATENTSCHRIFT**

(45) Veröffentlichungstag der Patentschrift: **18.09.91**

(51) Int. Cl.5: **B60K 26/04**, F02D 11/10

(21) Anmeldenummer: **87103646.3**

(22) Anmeldetag: **13.03.87**

(54) **Einrichtung zur Übertragung der Position eines durch einen Fahrzeugführer betätigbaren Steuerelements.**

(30) Priorität: **03.12.86 DE 3641275**

(43) Veröffentlichungstag der Anmeldung:
**08.06.88 Patentblatt 88/23**

(45) Bekanntmachung des Hinweises auf die
Patenterteilung:
**18.09.91 Patentblatt 91/38**

(84) Benannte Vertragsstaaten:
**DE FR GB NL SE**

(56) Entgegenhaltungen:
GB-A- 2 144 179
GB-A- 2 157 367

PATENT ABSTRACTS OF JAPAN, Band 10,
Nr. 109 (M-472)[216], 23. April 1986; & JP - A -
60 240 835 (NISSAN) 29.11.1985

PATENT ABSTRACTS OF JAPAN, Band 9, Nr.
3 (M-349)[1726], 9. Januar 1985; & JP - A - 59
153 945 (NISSAN) 01.09.1984

(73) Patentinhaber: **VDO Adolf Schindling AG**
**Gräfstrasse 103**
**W-6000 Frankfurt/Main 90(DE)**

(72) Erfinder: **Pfalzgraf**
**Luisenstrassen 24**
**W-6000 Frankfurt am Main 1(DE)**

(74) Vertreter: **Klein, Thomas, Dipl.-Ing. (FH)**
**Sodener Strasse 9 Postfach 6140**
**W-6231 Schwalbach a. Ts.(DE)**

## Beschreibung

Die Erfindung betrifft eine Einrichtung zur Übertragung der Position eines durch einen Fahrzeugführer betätigbaren Steuerelements nach dem Oberbegriff des Anspruchs 1. Eine Solche Einrichtung ist aus dem Dokument JP-A-60 240 835 (Nissan) bekannt.

Bei derartigen bekannten Einrichtungen erfolgt normalerweise die Übertragung der Position des Steuerelements, d.h. üblicherweise der Gaspedalstellung, auf die Drosselklappe eines Vergasers bzw. die Regelstange einer Einspritzpumpe elektrisch über den mit dem Gaspedal gekuppelten Sollwertgeber sowie elektrische Übertragungsmittel, welche außer Leitungen einen elektronischen Regler oder ein elektronisches Steuergerät umfassen; auf das elektrische Stellglied (EP-Al-0123731). Das Stellglied ist wiederum mechanisch mit der Drosselklappe bzw. der Regelstange, welche das eigentliche Stellorgan bilden, ständig form- und kraftschlüssig gekuppelt. Damit ein derart elektrisch gesteuertes Kraftfahrzeug auch in den seltenen Störfällen manövrierfähig bleibt, wenn die Sollwertgeberstellung nicht korrekt auf das Stellglied und auf das Stellorgan übertragen wird, ist wirkungsmäßig parallel zu den elektrischen Übertragungsmitteln ein mechanisches Sicherheitsübertragungselement zwischen dem Steuerelement des Sollwertgebers bzw. dem Sollwertgeber selbst und dem Stellorgan angeordnet, und zwar so, daß bei normaler Funktion der elektrischen Übertragungsmittel das Sicherheitsübertragungselement kraftlos durch das Steuerelement mit bewegt wird, jedoch im Falle einer Störung der elektrischen Übertragungsmittel die Übertragung der Steuerelementposition auf das Stellorgan übernimmt. Dadurch erhält das Fahrzeug selbsttätig eine sogenannte Notfahreigenschaft. Im einzelnen kann das Sicherheitsübertragungselement aus einem Notfahrgestänge oder aber einem Bowdenzug bestehen. Damit ein unbeabsichtigtes Hochlaufen der Motordrehzahl im Defektfall vermieden wird, ist das Stellorgan durch eine Rückstellfeder in seine Leerlaufstellung vorgespannt. Um das Sicherheitsübertragungselement bei normaler Funktion des elektrischen Sollwertgebers der elektrischen Übertragungsmittel sowie des elektrischen Stellglieds nicht zu belasten, kann das mechanische Sicherheitsübertragungselement an dem Stellorgan in Verstellrichtung um eine vorbestimmte Lose oder Spiel frei beweglich angeordnet sein, welche kleiner als der maximale Verstellweg ist. Mit Hilfe dieser Lose wird auch gewährleistet, daß bei intakter Einrichtung das Stellglied und das Stellorgang sich ungehindert in eine der Leerlaufstellung nähere Position bewegen kann als sie der augenblicklichen Sollwertgeberposition entspricht, beispielsweise wenn die Stellgliedposition nicht nur durch die Sollwertgeberposition, sondern durch Zusatzfunktionen (mit-)bestimmt wird. Solche Zusatzfunktionen ist beispielsweise eine Enddrehzahlbegrenzung oder eine Schubabschaltung. Diese Zusatzfunktionen werden durch einen elektronischen Regler ausgeführt. Weist das Sicherheitsübertragungselement ein sogenanntes Ausgleichselement auf, welches im wesentlichen aus zwei gegeneinander verstellbaren Teilen sowie einer Überhubfeder besteht, wobei je eines der beiden Teile mit dem Stellglied und das andere mit dem Sollwertgeber bzw. dem Steuerelement in Verbindung steht, so kann insbesondere bei einem Defekt des Sollwertgebers aber noch arbeitendem elektronischen Regler das Stellglied und das Stellorgan in Richtung zur Leerlaufstellung bewegt werden, obwohl das Sicherheitsübertragungselement bereits eine formschlüssige Kupplung zwischen dem Steuerelement und dem Stellorgan nach Überschreiten der Lose hergestellt hat. In dieser Einrichtung ist die Federkraft der Überhubfeder größer als diejenige der Rückstellfeder. Deswegen kann durch Betätigung des Steuerelements in Vollgasrichtung ein manövrierfähiger Fahrbetrieb erfolgen, wenn eines der elektrischen Elemente oder Teile so ausgefallen ist, daß die Rückstellfeder das Stellorgan in Leerlaufstellung bewegen würde. Dabei ist das Sicherheitsübertragungselement allerdings nicht nur mit der Kraft der Rückstellfeder belastet, sondern auch mit Reibungs- und/oder Haftkräften des Stellglieds und der das Stellglied mit dem Stellorgan verbindenden Kupplungsmitteln. Wenn das Stellglied blockiert, kann das Stellorgan mit dem mechanischen Sicherheitsübertragungselement nicht mehr betätigt werden. Ein Notfahrbetrieb ist nicht mehr möglich. Befindet sich in dieser Situation das Stellglied nahe der Vollgasstellung, so kann zwar durch ein übliches bekanntes Sicherheitssystem die Kraftstoffzufuhr oder die Zündung abgeschaltet werden, um Gefahren durch einen unkontrollierten Fahrbetrieb zu vermeiden, dabei wird aber in Kauf genommen, daß das Fahrzeug stehen bleibt, wodurch in ungünstigen Verkehrssituationen Fahrzeug und Insassen wiederum gefährdet sein können.

Der vorliegenden Erfindung liegt daher die Aufgabe zugrunde, die Sicherheit einer Einrichtung zur Übertragung der Position eines durch einen Fahrzeugführer betätigbaren Steuerelements weiter zu erhöhen und insbesondere Notfahreigenschaften des Fahrzeugs auch bei ungünstigen Störungsfällen zu gewährleisten, bei denen das Stellorgan sonst nicht mehr betätigt werden kann. Gleichzeitig soll auch in diesen besonderen Störungsfällen eine Entlastung des mechanischen Sicherheitsübertragungselements eintreten. Die weiterentwickelte Einrichtung soll sich selbst durch hohe Betriebssicherheit und die Möglichkeit einer zuverlässigen Funktionskontrolle auszeichnen.

Diese Aufgabe wird durch die Ausbildung der Einrichtung mit den in dem Anspruch 1 angegebenen Merkmalen gelöst.

Die Erfindung geht davon aus, daß von den bisher weitgehend gleichwertigen Möglichkeiten, das Sicherheitsübertragungselement an dem Stellorgan oder dem Stellglied anzuordnen, wobei zwischen dem Stellglied und dem Stellorgan eine steuerbare Kupplung angeordnet ist und die Kupplung im Störungsfalle selbsttätig geöffnet wird, die elektrisch steuerbare Kupplung als elektromagnetisch betätigbare Rastverbindung zwischen dem Stellglied und dem Stellorgan auszubilden.

Damit wird erreicht, daß bei einer Störung der elektrischen Übertragung der Gaspedalstellung auf den Ausgang des Stellglieds die mechanische Betätigung des Stellorgans mittels des Sicherheitsübertragungselements nicht mehr gehemmt wird. Dies gilt beispielsweise bei einem Stromausfall der Anlage bzw. der elektrischen Übertragungselemente. Vor allem wird dadurch aber gewährleistet, daß auch dann, wenn das Stellglied blockiert, die Notfahreigenschaften des Fahrzeugs aufrechterhalten werden. - Bei der besonders vorteilhaften Ausbildung der Einrichtung nach den Ansprüchen 8 und 9 wird dabei im Notfahrbetrieb die maximale Stellung des Stellorganhebels in Richtung auf die Vollgasstellung durch die Lose begrenzt. Die Grenze der Lose wird dabei durch die Kante des Ausschnitts an dem Übertragungshebel gebildet, an der ein Ende der Überhubfeder zur Anlage gelangt. Durch die begrenzte maximale Stellung im Notfahrbetrieb wird der Fahrer in sicherheitserhöhender Weise auf den Störfall hingewiesen.

Die Einrichtung zur Übertragung der Position des Steuerelements mit Notfahreigenschaft kann in wenig aufwendiger Weise beispielsweise vor einem Fahrtantritt geprüft werden. Dies ist wichtig, da die Notfahreigenschaft nur selten während des Fahrzeugbetriebs aktiviert wird, dann aber zuverlässig funktionieren soll. Die Testmöglichkeit beruht darauf, daß die gesteuerte Kupplung nach Anspruch 5 durch einen willkürlich betätigbaren Prüfsignalgeber geöffnet werden kann. Das Prüfsignal kann insbesondere darin bestehen, daß nach Anspruch 7 die Kupplung stromlos geschaltet wird, so daß sie in gleicher Weise betätigt wird wie in dem Störungsfall des ausgefallenen Bordnetzes. Während der Öffnung der Kupplung zum Prüfen kann die übrige Einrichtung mit weiteren Eingangssignalen beaufschlagt werden, und die Reaktion des Stellorgans auf diese Eingangssignale kann ausgewertet werden. Der erste Testfall besteht in einer Überprüfung der Sicherheitsübertragungsmittel zwischen dem Steuerelement und dem Stellorganelement. Bei durch das Prüfsignal geöffneter steuerbarer Kupplung wird das Steuerelement in die Vollgasstellung bewegt, und es wird geprüft, ob das Stellorganelement bzw. der Stellorganhebel in die maximale Stellung für den Notfahrbetrieb gelangt. Der zweite Prüffall, der ebenfalls bei geöffneter steuerbarer Kupplung durchgeführt wird, gibt einen definierten Betriebszustand durch das elektrische Stellsignal an dem Stellglied vor, beispielsweise eine bestimmte Laststellung (Vollgas), eine bestimmte Drehzahl, Schuberkennung und dergleichen. Es wird dann überprüft, ob der Verbrennungsmotor gleichwohl einen Betriebszustand annimmt bzw. beibehält, der nicht durch die Stellung des Stellglieds bestimmt ist.

Beispielsweise darf bei einer Stellung des Stellglieds in der Vollgasstellung der Motor nicht hochdrehen.

Als gesteuerte Kupplung zwischen Stellglied und Stellorgan eignet speziell sich eine elektromagnetisch betätigte Rastverbindung. Durch elektromagnetische Betätigung der Rastverbindung wird eine form- und kraftschlüssige Verbindung zwischen dem Stellglied und dem Stellorgan hergestellt, wobei diese beiden Elemente eine vorbestimmte Relativlage zueinander einnehmen.

Als Variante der gesteuerten Kupplung kann zwischen dem Stellglied und dem Stellorgan ein Pneumatikzylinder mit Kolben angeordnet sein, der mittels Druck- oder Saugluft betätigbar ist. Zum Öffnen der Kupplung kann der Pneumatikzylinder über ein gesteuertes Ventil gelüftet werden, so daß sich der Kolben gegenüber dem Zylinder und somit das Stellorgan relativ zu dem Stellglied bewegen kann.

Das die gesteuerte Kupplung betätigende Störungssignal kann selbsttätig durch eine intelligente Fehlererkennungseinrichtung erzeugt werden, die beispielsweise erkennt, daß die rückgemeldete Stellgliedstellung erheblich von der Position abweicht, die das Stellglied aufgrund der Stellsignale angenommen haben müßte.

Die gesteuerte Kupplung ist nach Anspruch 10 zwischen dem Stellglied und einem Stellorgan angeordnet, an dem die Rückstellfeder angreift. Damit wird eine weitere Voraussetzung dafür geschaffen, daß bei geöffneter steuerbarer Kupplung der Notfahrbetrieb aufgenommen werden kann, indem durch das Sicherheitsübertragungselement die Rückstellkraft überwunden wird.

In besonders vorteilhafter Weise weist die Einrichtung die Merkmale nach Anspruch 11 auf. Dadurch, daß der Übertragungshebel und der Stellorganhebel gegeneinander verdrehbar sind, und dadurch, daß die Überhubfeder bei einer Richtung der Relativdrehung beidseitig nur an dem Stellorganhebel und dessen Ansatz anliegt, wird ein Freilauf gebildet. Durch diesen ist das Sicherheitsübertragungselement entlastet, wenn im ungestörten Betriebsfall beispielsweise das Steuerelement - das Gaspedal - in Leerlaufstellung ist, während die Fahrgeschwindigkeit über den elektronischen Regler und das Stellglied selbsttätig gesteuert wird. Kraftfrei ist auch das Sicherheitsübertragungselement im Normalbetrieb, wenn der Fahrer zwar durch Betätigung des Steuerelements, aber im Anschluß an dieses über die Elektronik und das elektrische Stellglied das Stellorgan elektrisch verstellt. Im letztgenannten Betriebsfall kann sich, wie oben erwähnt, auch die Lose zwischen einem Ende der Überhubfeder und einer Kante an dem Ausschnitt des Übertragungshebels auswirken, wenn die Kante entgegen der Drehrichtung, bei der der Freilauf wirksam wird, auf das Ende der Überhubfeder zubewegt wird, welches an dem Ansatz des Stellorganhebels anliegt.

Die Erfindung wird im folgenden anhand eines Ausführungsbeispiels mit fünf Figuren beschrieben. Es zeigen:

Fig. 1 eine schematische Darstellung der Einrichtung im Normalbetrieb, in dem die Stellung des Stellorganelements durch elektrische Nachlaufsteuerung in Abhängigkeit von der Position des Steuerelements eingestellt wird,

Fig. 2 die Einrichtung in dem Betriebsfall, in dem bei einer Leerlaufstellung des Steuerelements der Stellorganhebel durch eine Aufregelungsfunktion, beispielsweise eine Drehzahl- oder Geschwindigkeitsregelung, bestimmt wird,

Fig. 3 einen normalen Betriebsfall, in dem bei dem in Vollgasstellung bewegten Steuerelement durch den elektronischen Regler eine Geschwindigkeits- oder Drehzahlbegrenzung über den Stellorganhebel erfolgt,

Fig. 4 die Einrichtung im Störungs- oder Fehlerfall, in dem der Stellorganhebel durch die Sicherheitsübertragungsmittel, speziell ein Notfahrgestänge, mechanisch und nicht mehr durch das Stellglied betätigt wird und

Fig. 5 die Einrichtung in einer Überprüfungssituation, in der ein Fehlerfall simuliert wird.

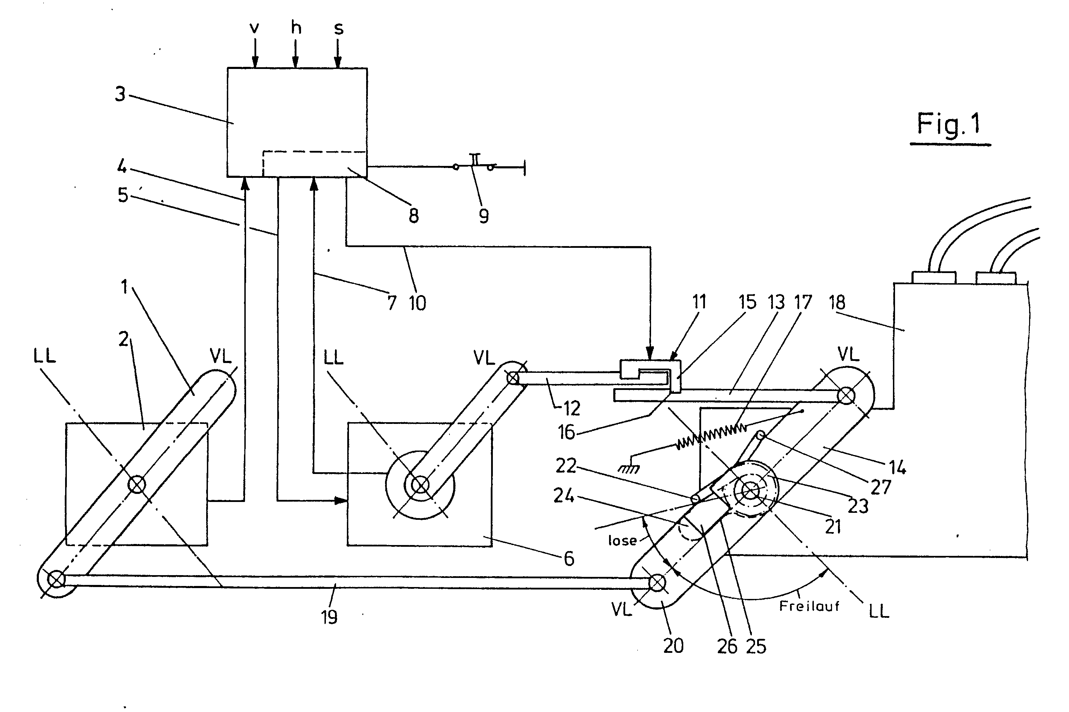

In Fig. 1 ist mit 1 ein durch ein Fahrzeug betätigbares Steuerelement bezeichnet, welches ein Gaspedal oder einen mit einem Gaspedal verbundenen Hebel darstellen kann. Das Steuerelement ist mit einem elektrischen Sollwertgeber 2 verbunden, der ein der Stellung des Steuerelements 1 entsprechendes elektrisches Signal an einen elektronischen Regler 3 abgibt. Mit "LL" ist die Leerlaufstellung des Steuerelements gekennzeichnet, während die Vollaststellung mit "VL" abgekürzt ist. Fig. 1 zeigt also die Situation der Einrichtung bei Vollast bzw. Vollgasstellung des Steuerelements. Die Abkürzungen "LL" und VL" werden auch zur Kennzeichnung der Lage der übrigen Bauelemente der Einrichtung verwendet.

Der elektronische Regler 3 weist weitere Eingänge auf, die mit v, h und s markiert sind. Damit wird angedeutet, daß der Regler auch dazu eingerichtet ist, eine Geschwindigkeitsregelung oder -begrenzung als sogenannte Aufregelungsfunktion durchzuführen, und erkennen kann, wenn eine Schubabschaltung erfolgen soll (Eingang s = Schuberkennung). Im Zusammenhang mit Fig. I interessiert nur das von dem Sollwertgeber 2 abgegebene elektrische Signal an einem Eingang 4 des Reglers.

Von einem Ausgang 5 des Reglers wird ein elektrisches Stellsignal in ein elektrisches Stellglied 6 eingespeist, der beispielsweise aus einem Elektromotor und einem Getriebe im wesentlichen bestehen kann. Von dem Stellglied erfolgt über einen Eingang 7 eine Rückmeldung der Stellgliedposition.

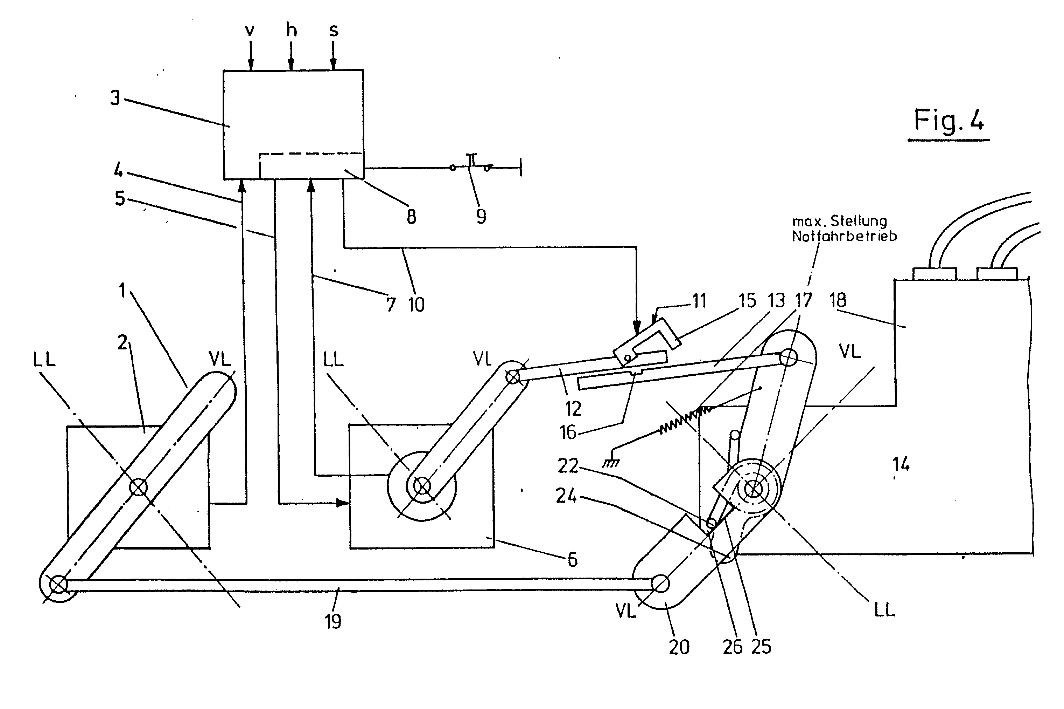

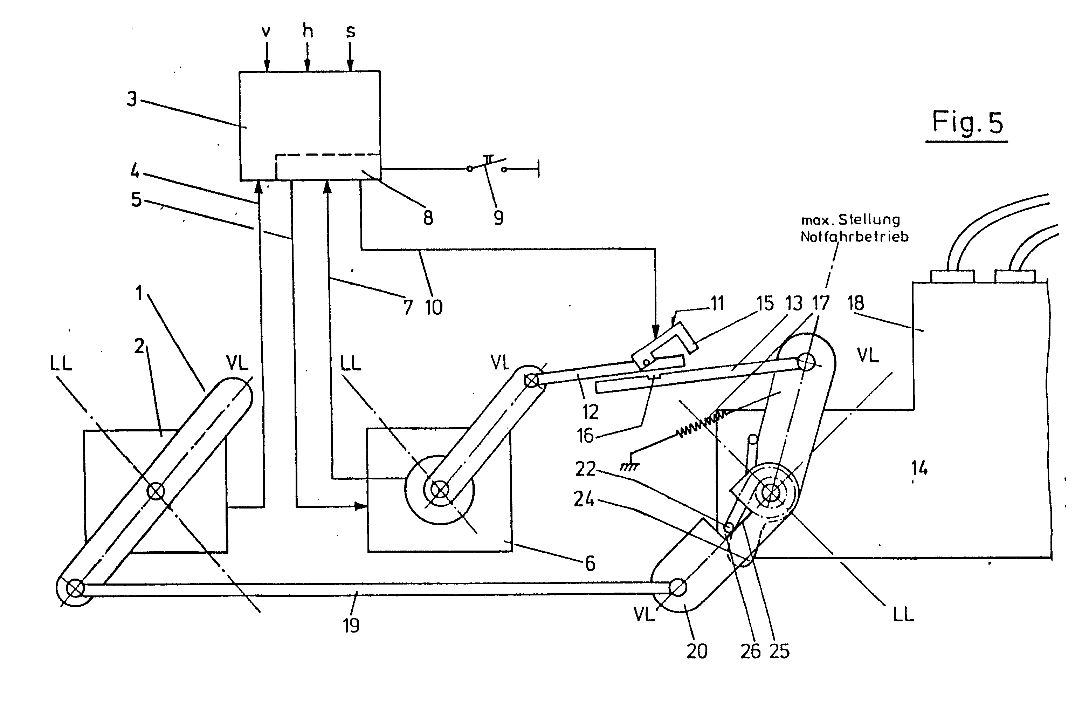

Der Regler umfaßt noch einen durch eine unterbrochene Linie gekennzeichneten Teil 8, der in Verbindung mit einem durch den Fahrer betätigbaren Kontakt 9 als Prüfsignalgeber sowie in Verbindung mit dem Eingang 7 als Fehlererkennungseinrichtung fungiert. Diese Einrichtung wird weiter unten in Verbindung mit den Figuren 4 und 5 besprochen. - Von dem Regler mit der Fehlererkennungseinrichtung 8 führt ein elektrischer Ausgang 10 zu einem nicht dargestellten elektromagnetischen Betätigungselement einer gesteuerten Kupplung 11, die als Rastverbindung ausgebildet ist. Die Rastverbindung liegt im Zuge eines Stellgliedgestelles mit den Stellgliedstangen 12 und 13, welche eine mechanische Verbindung zwischen dem elektrischen Stellglied und einem Stellorganhebel 14 herstellen können. Dazu weist die gesteuerte Kupplung 11 eine Raste 15 auf, die elektromagnetisch betätigt in eine Nut 16 kraft- und formschlüssig eingreift oder aber bei entregtem Betätigungselement aus dieser Nut entfernt ist.

Der durch eine Rückstellfeder 17 belastete Stellorganhebel dient in dem vorliegenden Beispiel zur Verstellung der Regelstange einer Einspritzpumpe 18. In anderen Anwendungsfällen kann statt der Regelstange der Einspritzpumpe als Stellorgan die Drosselklappe eines Vergasers betätigt werden.

Die Einrichtung zur automatischen Aufrechterhaltung einer Notfahreigenschaft besteht im wesentlichen aus einem Notfahrgestänge 19 als mechanisches Sicherheitsübertragungsmittel zwischen dem Steuerelement 1 und dem Stellorganhebel 14.

Das Notfahrgestänge greift jedoch nicht unmittelbar an dem Stellorganhebel an, sondern an einem Übertragungshebel 20, der um eine Achse 21 drehbar gelagert ist, und zwar auch drehbar gegenüber dem Stellorganhebel 14, welcher um die glei-

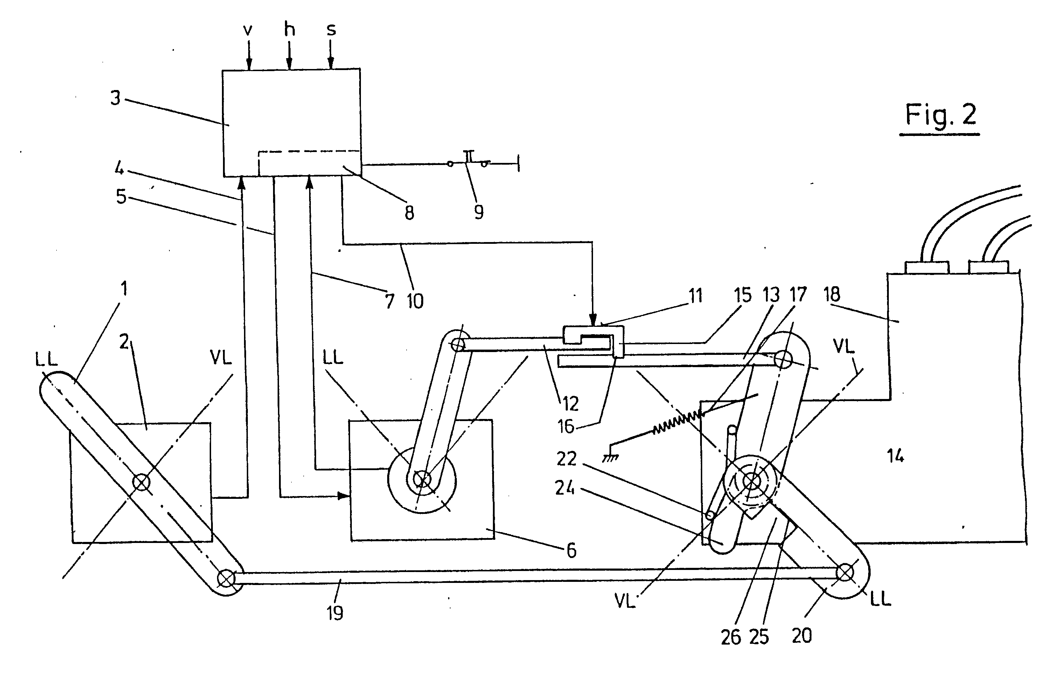

che Achse 2I verstellt werden kann. Der Übertragungshebel 20 kann nur über ein Ende 22 einer Überhubfeder 23 auf den Stellorganhebel I4 einwirken. Die Überhubfeder 23, die im wesentlichen zylindrisch geformt und koaxial zu der Achse 2I angeordnet ist, kann mit dem Ende 22 an einem Ansatz 24 des Stellorganhebels I4 anliegen, was z.B. aus Fig. 2 besser ersichtlich ist. Das Ende 22 kann aber auch zur Anlage an einer Kante 25 eines Ausschnitts 26 gelangen, der aus dem Übertragungshebel ausgeformt ist. Der Winkel zwischen der Kante 25 und der strichpunktierten Linie durch den Berührungspunkt des Endes 22 der Überhubfeder an dem Ansatz 26, wenn die Vorderkanten des Ansatzes und des Übertragungshebels in Dekkung sind, wird als Lose bezeichnet. Der Winkel, um den der Übertragungshebel weiter von dem Ende 22 der Überhubfeder bis in die Leerlaufstellung wegbewegt werden kann, wird als Freilauf definiert. Es wird noch bemerkt, daß ein zweites Ende 27 der Überhubfeder ständig an der Vorderkante des Stellorganhebels I4 anliegt. Zwischen den Enden 22 und 27 der Überhubfeder kann ein Moment übertragen werden, welches das Moment übersteigt, welches durch die Rückstellfeder I7 auf den Stellorganhebel I4 ausgeübt wird.

Im normalen Betriebsfall wird die Stellung des Stellorganhebels damit des Stellorgans bei geschlossener gesteuerter Kupplung II durch das Stellglied 6 bestimmt, welches ein elektrisches Stellsignal von dem Regler 3 erhält. Die Position des Steuerelements 3 wird somit elektrisch auf das Stellorgan übertragen. Die elektrische Übertragung erfolgt nach dem Prinzip der Nachlaufsteuerung. Ein Rückmeldesignal, welches die Stellgliedposition angibt, wird dabei in den Eingang 7 des Reglers 3 eingespeist. In einer Fehlererkennungseinrichtung in dem Regler wird zugleich festgestellt, daß das Stellglied ordnungsgemäß funktioniert. Deswegen erhält die steuerbare Kupplung II über den elektrischen Ausgang I0 der Fehlererkennungseinrichtung ein Signal, beispielsweise eine Spannung, welche die Kupplung in geschlossenem Zustand hält.

In diesem normalen Betriebsfall wird das Notfahrgestänge I9, welches an dem Steuerelement angreift, wie immer so betätigt, daß es an dem Stellorgan I4 eine Verstellung hervorrufen könnte, die gleich groß wie die durch das Stellglied 6 bewirkte Verstellung des Stellorganhebels I4 ist. Im normalen Betriebsfall wirkt sich jedoch die Betätigung des Notfahrgestänges nicht auf den Stellorganhebel I4 aus. Das Notfahrgestänge kann in diesem Betriebsfall keinen Kraftschluß auf den Stellorganhebel übertragen, da der Übertragungshebel 20 entweder in einer Drehrichtung im Bereich der durch den Ausschnitt 26 gebildeten Lose bewegt wird, so daß das Ende 22 der Überhubfeder 23 nicht zur Anlage an die Kante 25 gelangt oder aber der Übertragungshebel 20 wird in der anderen Drehrichtung noch weiter von dem Ende 22 der Überhubfeder in dem Bereich des Freilaufs wegbewegt. Ein geringer Versatz zwischen dem Notfahrgestänge I9 und den Stellgliedstangen I2, I3 kann sich somit nicht auswirken, vielmehr wird auch in diesem Fall das Notfahrgestänge kraftlos bei Betätigung des Steuerelements mitbewegt.

In den anschließend zu besprechenden Betriebsfällen wird von der gleichen Struktur der Einrichtung Gebrauch gemacht, wie sie im Zusammenhang mit Fig. I beschrieben wurde. Einzelne Teile in dieser Einrichtung können jedoch unterschiedliche Stellungen einnehmen.

In Fig. 2 ist ebenfalls eine normale Betriebssituation dargestellt, und zwar eine selbsttätige Regelung beispielsweise der Drehzahl des Verbrennungsmotors oder der Fahrgeschwindigkeit des Fahrzeugs durch den elektronischen Regler 3, während durch den Fahrzeugführer und das durch ihn betätigte Steuerelement keine Verstellung des Stellorganhebels erfolgen soll. In diesem normalen Betriebszustand ist die steuerbare Kupplung II ebenfalls infolge des entsprechenden Signals von dem Ausgang I0 der Fehlererkennungseinrichtung 8 geschlossen. Es sei angenommen, daß das Steuerelement I sich in der Leerlaufstellung oder zumindest in einer Stellung befindet, die einem geringeren Durchsatz des Kraftstoffluftgemisches entspricht als er dem elektrischen Stellgliedsignal an dem Ausgang 5 des Reglers 3 entspricht. In diesem Fall wird also der Stellorganhebel im Vergleich zu der Sollwertgeberstellung und der Stellung des Notfahrgestänges I9 weiter aufgeregelt. Dies erfolgt ohne Einleitung einer Kraft auf das Notfahrgestänge über den Übertragungshebel 20, da der Ansatz 24 des Stellorganhebels dem Übertragungshebel wegbewegt wird.

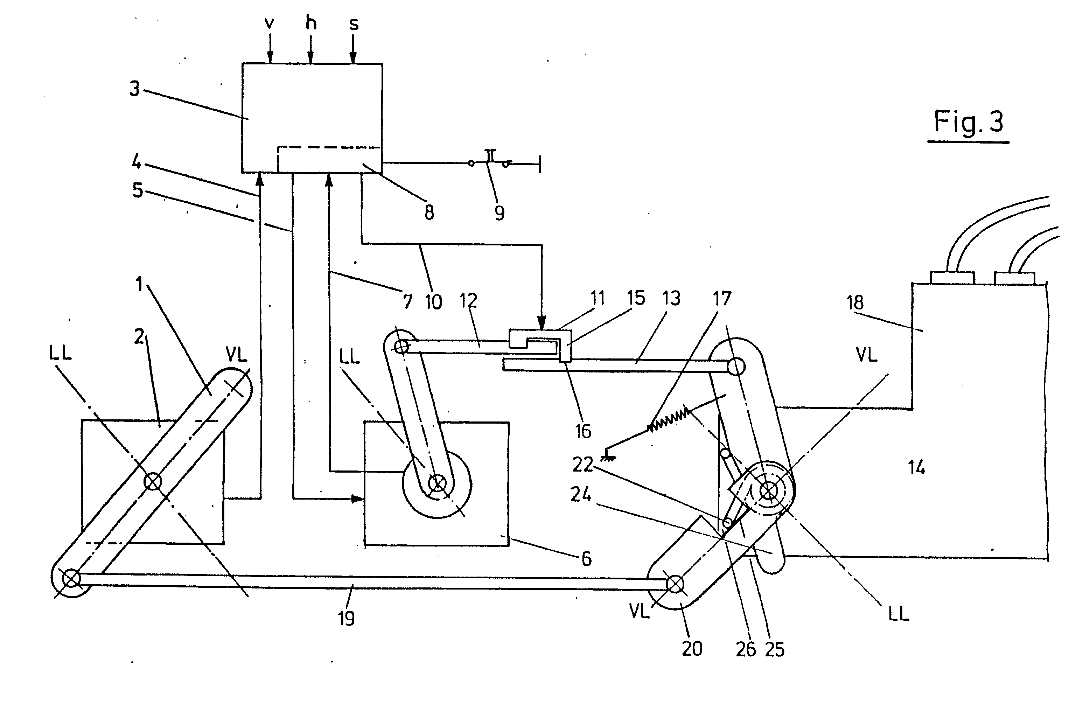

In der in Fig. 3 dargestellten Situation ist eine Einstellung der Teile in einem ebenfalls normalen Betriebsfall gezeigt, in dem die Stellorganposition selbsttätig abger egelt wird, d.h. in Richtung auf einen kleineren Durchsatz des Kraftstoffluftgemisches gefahren wird, als er der Stellung des Steuerelements entspricht. Dieser Betriebsfall kann eine Begrenzungsfunktion sein, die beispielsweise bei Erreichen einer Höchstgeschwindigkeit oder maximalen Drehzahl durch den als Begrenzer wirkenden Regler 3 ausgeübt wird. Durch Plausibilitätskontrolle der Rückmeldung der Stellgliedposition an dem Eingang 7 der Fehlererkennungseinrichtung wird in diesem normalen Betriebsfall ebenfalls die steuerbare Kupplung II geschlossen gehalten. Das Stellglied 6 bewegt infolge der Begrenzungsfunktion den Stellorganhebel I4 in Fig. 3 entgegen dem Uhrzeigersinn,um den Verbrennungsmotor abzuregeln, während das Steuerelement an dem Sollwertgeber sich beispielsweise in der Vollaststellung befindet. Das Stellglied kann diese Drehung des Stellorganhebels -unterstützt von der Rückstellfeder I7 - durchführen, indem das von der Überhubfeder auf den Stellorganhebel ausgeübte Moment überwunden wird, wenn das Ende 22 der Überhubfeder an der Kante 25 des Übertragungshebels 20 anliegt. Das Notfahrgestänge I9 wird allerdings in diesem speziellen Betriebsfalle mit einer Kraft belastet, die dem von der Überhubfeder auf den Übertragungshebel 20 eingeleiteten Moment entspricht.

In dem in Fig. 4 dargestellten Betriebsfall der Einrichtung ist diese gestört, sei es daß die Anlage stromlos ist oder ber weil das Stellglied 6 klemmt. In jedem Falle wird durch die Fehlererkennungseinrichtung 8 erkannt, daß die von dem Stellglied an dem Eingang 7 gemeldete Stellung nicht annähernd der Stellung entspricht, die durch das elektrische Stellsignal an dem Ausgang 5 des Reglers befohlen wurde. In diesem Fall tritt an dem Ausgang 10 der Fehlererkennungseinrichtung ein Signal auf, vorzugsweise wird die Spannung an diesem Ausgang 0, um die Rastverbindung der gesteuerten Kupplung II aufzuheben, so daß diese geöffnet ist. Die beiden Stellgliedstangen I2 und I3 können somit, wie in Fig. 4 gezeigt, gegeneinander verschoben werden. - In dem angenommenen Störungsfall der Einrichtung wird ein Notfahrbetrieb des Fahrzeugs durch das Notfahrgestänge I9 ermöglicht, welcher wie stets eine der Position des Steuerelements entsprechende Stellung des Übertragungshebels 20 bewirkt. Mit der Kante 25 an dem Ausschnitt 26 des Übertragungshebels 20 gelangt das an dem Ansatz 24 anliegende Ende 22 der Überhubfeder in Kontakt, sobald durch die Relativbewegung zwischen Übertragungshebel und Stellorganhebel die Lose überschritten wurde. Der Stellorganhebel kann über die Überhubfeder in diesem Fall weiter in eine den Verbrennungsmotor aufregelnde Stellung gedreht werden, da die Überhubfeder die Rückstellkraft der Rückstellfeder I7 überwinden kann, und die Bewegung des Stellorganhebels infolge der geöffneten steuerbaren Kupplung II nicht weiter gehemmt wird. Dementsprechend wird auch das Notfahrgestänge I9 im wesentlichen nur durch die Rückstellkraft belastet.

In Fig. 4 ist angedeutet, daß die maximale Stellung, welche der Stellorganhebel I4 im Notfahrbetrieb annehmen kann, hinter der Vollaststellung um einen Winkel zurückbleibt, welcher der Lose entspricht. Dadurch wird der Fahrzeugführer zusätzlich auf die Notfahrsituation aufmerksam und angehalten, nicht die größtmögliche Leistung des Verbrennungsmotors in diesem Störfall auszunutzen, sondern eine Werkstatt aufzusuchen.

In Fig. 5 ist schließlich die Einstellung der Einrichtung dargestellt, wenn diese dahingehend überprüft wird, ob die automatische Notfahreigenschaft gewährleistet ist. Hierzu wird der Kontakt 9 geöffnet und in der Prüfsignaleinrichtung 8 - die zusammen mit der Fehlererkennungseinrichtung 8 dargestellt ist - wird ein Prüfsignal erzeugt, welches einem Störfall entspricht. Dies bedeutet, daß das nicht dargestellte Betätigungselement der steuerbaren Kupplung II strom- bzw. spannungslos wird und die Kupplung wie im Störfall öffnet. Es wird dann festgestellt, ob,wie in Fig. 5 gezeigt, der Stellorganhebel zwischen die maximale Stellung für Notfahrbetrieb durch Betätigung des Steuerelements gedreht werden kann. Die Entkopplungsfunktion der steuerbaren Kupplung II kann bei weiterhin geöffnetem Kontakt 9 dadurch überprüft werden, daß ein definierter Betriebszustand die Laststellung, die Drehzahl oder die Schuberkennung durch entsprechende Signale an den Eingängen v, n, s des Reglers 3 vorgegeben wird und ermittelt wird, ob trotz der geöffneten Kupplung eine Änderung des Betriebszustand des Verbrennungsmotors erfolgt. Diese Erkennung kann durch eine nicht dargestellte Erkennungseinrichtung, die beispielsweise Abweichungen der Motordrehzahl von einem vorgegebenen Wert ermittelt, selbsttätig erfolgen.

Ein besonderer Vorteil der Einrichtung besteht darin, daß durch das kraftlose Mitlaufen der Notfahreinrichtung deren Funktion nicht durch längerfristiges Ruhen funktionsunfähig werden kann.

## Patentansprüche

1. Einrichtung zur Übertragung der Position eines durch einen Fahrzeugführer betätigbaren Steuerelements zwischen einer Leerlauf- und einer Vollgasstellung über einen durch das Steuerelement verstellbaren elektrischen Sollwertgeber sowie elektrische Übertragungsmittel auf ein entsprechend zwischen einer Leerlauf- und einer Vollgasstellung verstellbares Stellglied, das mit einem das Kraftstoff-Luft-Gemisch eines Verbrennungsmotors steuernden Stellorgan durch Kupplungsmittel gekuppelt ist, mit mindestens einem zwischen dem Steuerelement des Sollwertgebers und dem Stellorgan angeordneten mechanischen Sicherheitsübertragungselement, durch das die Stellung des Steuerelements auf das Stellorgan übertragbar ist, wobei zwischen dem Stellglied (6) und dem Stellorgan (Stellorganhebel 14) eine elektrisch steuerbare Kupplung (11) angeordnet ist daß die Kupplung im Störungsfalle selbsttätig geöffnet wird,
dadurch gekennzeichnet, daß die elektrisch Steuerbare Kupplung (11) als elektromagnetisch betätigte Rastverbindung (Raste 15) zwischen dem Stellglied (6) und dem Stellorgan (Stellorganhebel 14) ausgebildet ist.

**2.** Einrichtung nach Anspruch 1,
**gekennzeichnet durch**
einen mittels Druck- oder Saugluft betätigbaren Pneumatikzylinder mit Kolben zwischen Stellglied und Stellorgan.

**3.** Einrichtung nach Anspruch 2,
**dadurch gekennzeichnet,**
daß der Pneumatikzylinder mit einem Entlüftungsventil zum Entkuppeln des Stellorgans von dem Stellglied in Verbindung steht.

**4.** Einrichtung nach einem der vorangehenden Ansprüche,
**dadurch gekennzeichnet,**
daß die Kupplung (11) durch ein Störungssignal ansteuerbar ist, welches durch ein mit den elektrischen Übertragungsmitteln (Regler 3) gekoppelte Fehlererkennungseinrichtung (8) abgegeben wird.

**5.** Einrichtung nach einem der Ansprüche 1 - 3,
**dadurch gekennzeichnet,**
daß die steuerbare Kupplung (11) durch einen willkürlich betätigbaren Prüfsignalgeber (8, 9) öffenbar ist.

**6.** Einrichtung nach Anspruch 5,
**dadurch gekennzeichnet,**
daß der Prüfsignalgeber (8, 9) dazu eingerichtet ist, Prüfsignale an das Stellglied (6) während gleichzeitig geöffneter steuerbarer Kupplung (11) abzugeben.

**7.** Einrichtung nach einem der Ansprüche 1,, 4 - 6,
**dadurch gekennzeichnet,**
daß die steuerbare elektrische Kupplung (11) im Störungsfall und im Testfall stromlos ist.

**8.** Einrichtung nach einem der vorangehenden Ansprüche, bei der das Stellglied durch eine Rückstellfeder in seine Leerlaufstellung vorgespannt ist,
**dadurch gekennzeichnet,**
daß die steuerbare Kupplung (11) zwischen dem Stellglied (6) und einem Stellorganelement (Stellorganhebel 14) angeordnet ist, an dem die Rückstellfeder (17) angreift.

**9.** Einrichtung, bei der das mechanische Sicherheitsübertragungselement an dem Stellorgan in Verstellrichtung (Vollgasrichtung) um eine Lose (Spiel) gleich einem vorgegebenen Teil des maximalen Verstellwegs frei beweglich angeordnet ist, indem das Sicherheitsübertragungselement einen Anschlag aufweist, der nach Überschreiten der Lose mit dem Stellorganelement gekuppelt ist, mit einem Ausgleichselement, über das entgegen der Kraft einer Überhubfeder gleichzeitig der mit dem Sollwertgeber verbindbare Teil des Sicherheitsübertragungselements in Vollgasrichtung bewegbar ist und das Stellorganelement in Leerlaufrichtung bewegbar ist, nach einem der Ansprüche 1-8
**dadurch gekennzeichnet,**
daß ein Übertragungshebel (20), an dem das Sicherheitsübertragungselement (Notfahrgestänge 19) angelenkt ist, sowie ein Stellorganhebel (14) als Stellorganelement, an dem die gesteuerte Kupplung (11) sowie die Rückstellfeder (17) angreifen, gegeneinander um eine gemeinsame Achse (21) drehbar sind, daß die Überhubfeder (23), deren Federkraft größer als diejenige der Rückstellfeder ist, sich einerseits stets an dem Stellorganhebel (14) abstützt und andererseits je nach Relativdrehung des Stellorganhebels gegenüber dem Übertragungshebel innerhalb der Lose (Ausschnitt 26) an einem sich über die Drehachse hinaus erstreckenden Ansatz (24) des Stellorganhebels oder bei Überschreiten der Lose an einer Kante (25) eines aus dem Übertragungshebel (20) ausgeformten Ausschnitts (26) abstützt, welcher die Lose bildet.

## Claims

**1.** Device for transmitting the position of a control element which is operable by the driver of a vehicle between an idling and a full throttle position through an electrical setpoint transmitter controllable by the control element and electrical transmission agents to an actuator which can be moved correspondingly between an idling and a full throttle position and which is linked by linking agents to a control unit controlling the fuel-air mixture of an internal combustion engine, with at least one mechanical safety transmission element, which is positioned between the control element of the setpoint transmitter and the control unit and by which the position of the control element can be transmitted to the control unit, in which an electrically controllable coupling (11) is positioned between the actuator (6) and the control unit (control unit lever 14) so that the coupling is opened automatically in cases of malfunction, characterized in that the electrically controllable coupling (11) is formed as an electromagnetically operated detent connection (detent 15) between the actuator (6) and the control unit (control unit lever 14).

**2.** Device according to Claim 1, characterized by a pneumatic cylinder with piston(s), operable by means of air under pressure or suction, between the actuator and control unit.

3. Device according to Claim 2, characterized in that the pneumatic cylinder is connected to a vent valve to disconnect the control unit from the actuator.

4. Device according to one of the preceding Claims, characterized in that the coupling (11) can be controlled by a malfunction signal which is emitted by a fault recognition device (8) linked to the electrical transmission agent (controller 3).

5. Device according to one of Claims 1 -3, characterized in that the controllable coupling (11) can be opened by a manually operable test signal transmitter (8, 9).

6. Device according to Claim 5, characterized in that the test signal transmitter (8, 9) is set up for emitting test signals to the actuator (6) while at the same time the controllable coupling (11) is open.

7. Device according to one of Claims 1, 4 - 6, characterized in that the controllable electrical coupling (11) is de-energized in the case of malfunction and during tests.

8. Device according to one of the preceding Claims, in which the actuator is preloaded in its idling position by a restoring spring, characterized in that the controllable coupling (11) is positioned between the actuator (6) and a control unit element (control unit lever 14) on which the restoring spring (17) acts.

9. Device, in which the mechanical safety transmission element is positioned so that it is freely movable at the control unit in the adjustment direction (full throttle direction) by a slack (clearance) equal to a predetermined part of the maximum adjustment travel, in that the safety transmission element has a stop, which is linked to the control unit element when the slack has been taken up, with a compensating element by which, against the force of an overtravel spring, the part of the safety transmission element which can be connected to the setpoint value transmitter can be moved in the full throttle direction and at the same time the control unit element can be moved in the idling direction, according to one of Claims 1 - 8 characterized in that a transmission lever (20), to which the safety transmission element (emergency drive linkage 19) is coupled, and a control unit lever (14), as the control unit element on which the controlled coupling (11) and the restoring spring (17) act, can be rotated in relation to one another about a common axis (21), and in that the overtravel spring (23), the spring force of which is greater than that of the restoring spring, is always supported at one end against the control unit lever (14) and is supported at the other end, depending on the rotation of the control unit lever relative to the transmission lever within the slack (cutout 26), against a projection (24) of the control unit lever projecting beyond axis of rotation or, if the slack has been taken up, against an edge (25) of a cutout (26) which is formed from the transmission lever (20) and which forms the slack.

**Revendications**

1. Dispositif de transmission de la position d'un élément de commande, que le conducteur du véhicule peut manoeuvrer, entre une position de marche à vide et une position de plein gaz, par l'intermédiaire d'un émetteur électrique de valeur prescrite, que peut commander l'élément de commande, et de moyens électriques de transmission, à une unité réglante qui peut se déplacer de façon correspondante entre une position de marche à vide et une position de plein gaz et qui, par un moyen de couplage, est couplée à un organe réglant qui commande le mélange carburant-air d'un moteur à combustion interne, dispositif comportant au moins un élément de transmission mécanique de sécurité qui est disposé entre l'élément de commande de l'émetteur de valeur prescrite et l'organe réglant et grâce auquel la position de l'élément de commande peut être transmise à l'organe réglant, dispositif dans lequel un coupleur (11) à commande électrique est disposé entre l'unité réglante (6) et l'organe réglant (levier de l'organe réglant 14) et dans lequel le coupleur s'ouvre automatiquement en cas d'incident,

    dispositif caractérisé par le fait que le coupleur (11) à commande électrique est conçu sous forme d'une liaison par crantage (cran 15), actionnée par voie électromagnétique, entre l'unité réglante (6) et l'organe réglant (levier de l'organe réglant 14).

2. Dispositif selon la revendication 1, caractérisé par la présence d'un vérin pneumatique, manoeuvrable par air comprimé ou par dépression, avec piston, entre l'unité réglante et l'organe réglant.

3. Dispositif selon la revendication 2, caractérisé par le fait que le vérin pneumatique est en liaison avec une vanne de mise à l'atmosphère pour désaccoupler l'organe réglant d'avec l'unité réglante.

4. Dispositif selon l'une des revendications précédentes, caractérisé par le fait que le coupleur (11) peut être piloté par un signal d'incident qui est émis par un dispositif (8) de reconnaissance d'erreur couplé avec les moyens électriques de transmission (régulateur 3).

5. Dispositif selon l'une des revendications 1 à 3, caractérisé par le fait que le coupleur (11) pilotable peut s'ouvrir sous l'action d'un émetteur (8, 9) de signal de vérification que l'on peut manoeuvrer à volonté.

6. Dispositif selon la revendication 5, caractérisé par le fait que l'émetteur (8, 9) de signal de vérification est conçu pour envoyer des signaux de vérification à l'unité réglante (6) pendant que, simultanément, le coupleur (11) pilotable est ouvert.

7. Dispositif selon l'une des revendications 1, 4 à 6, caractérisé par le fait que le coupleur électrique (11) pilotable ne reçoit pas de courant en cas d'incident et en cas de vérification.

8. Dispositif selon l'une des revendications précédentes, dans lequel l'unité réglante est précontrainte à sa position de marche à vide par un ressort de rappel, dispositif caractérisé par le fait que le coupleur (11) pilotable est disposé entre l'unité réglante (6) et un élément de l'organe réglant (levier 14 de l'organe réglant) sur lequel agit le ressort (17) de rappel.

9. Dispositif dans lequel l'élément de transmission mécanique de sécurité est disposé avec possibilité de se déplacer librement sur l'organe réglant dans la direction du réglage (direction du plein gaz) d'un certain jeu égal à une portion prescrite de la course maximale de réglage, en ce sens que l'élément de transmission de sécurité présente une butée qui, après dépassement du jeu, est couplée avec l'élément de l'organe réglant, dispositif comportant un élément de compensation grâce auquel, à l'encontre de la force d'un ressort de dépassement de course et simultanément, la partie de l'élément de sécurité qui peut être reliée à l'émetteur de valeur prescrite peut se déplacer dans la direction de plein gaz tandis que l'élément de l'organe réglant peut se déplacer dans la direction de marche à vide, selon l'une des revendications 1 à 8,

dispositif caractérisé par le fait qu'un levier (20) auquel est articulé l'élément de transmission de sécurité (tringle 19 de marche de secours), ainsi qu'un levier (14) de l'organe réglant, qui joue le rôle de l'élément de l'organe réglant et sur lequel agissent le coupleur (11) commandé ainsi que le ressort (17) de rappel, peuvent tourner l'un par rapport à l'autre autour d'un axe (21) commun ; par le fait que le ressort (23) agissant en cas de dépassement de course, dont la force élastique est supérieure à celle du ressort de rappel, s'appuie d'une part en permanence contre le levier (14) de l'organe réglant et s'appuie d'autre part, selon chaque fois la rotation relative du levier de l'organe réglant par rapport au levier de transmission à l'intérieur du jeu (découpe 26), contre un embout (24), s'étendant au-delà de l'axe de rotation, du levier de l'organe réglant ou, après dépassement du jeu, contre une arête (25) d'une découpe (26), qui est effectuée dans le levier (20) de transmission et qui constitue le jeu.

Fig.1

v  h  s

3
4
5
7  10
8
9

1
2
LL
VL

11  15  13  17  18
12
16

LL
VL

VL
14
27
23
22
24
21
lose
20  26  25
Freilauf
LL

6
19
VL

EP 0 269 780 B1

10

Fig. 2

EP 0 269 780 B1

**Fig.3**

v   h   s

3

Fig. 4

4
5

8   9

7  10

max. Stellung
Notfahrbetrieb

11   15 13 17   18

LL

1

2   VL   LL   VL   12   VL

16

22

24   14

6

19   VL

20   26 25   LL

Fig.5